# EUROPEAN PATENT SPECIFICATION

(11) **EP 0 620 759 B1**
(45) Date of publication and mention of the grant of the patent: **14.08.1996**
(21) Application number: 93900640.9
(22) Date of filing: 23.11.1992
(51) Int. Cl.: B01J 4/02, C08J 3/20

(54) **PROCESS AND APPARATUS FOR TREATMENT OF A FLOWABLE BASE MATERIAL**
VERFAHREN UND APPARAT ZUR BEHANDLUNG EINES FLIESSENDEN GRUNDMATERIALS
PROCEDE ET DISPOSITIF DE TRAITEMENT D'UN MATERIAU DE BASE COULANT

(30) Priority: 23.11.1991 DE 4138518
(43) Date of publication of application: 26.10.1994
(73) Proprietor: E.I. DU PONT DE NEMOURS AND COMPANY, Wilmington Delaware 19898 (US)
(72) Inventor: MICHELS, Klaus, Josef, Maria, D-4700 Hamm (DE)
(74) Representative: Abitz, Walter, Dr.-Ing.
(86) International application number: US9210121
(87) International publication number: WO9309866

(56) References cited:
- DE-A- 2 703 832
- US-A- 2 689 839
- US-A- 4 057 607
- PRODUCT LICENSING INDEX vol. 177, no. 84, April 1971, page 47 ANON. 'Means for injecting additives into polycondensation reactions in autoclaves'

## Description

### BACKGROUND OF THE INVENTION

The invention is directed to a process and an apparatus for treatment of a flowable base material and particularly to the dosed introduction of an also flowable additive into the base material to be processed in at least two successive process steps.

### SUMMARY OF THE INVENTION

In the production of polyamides, a polyamide salt solution is prepared from hexamethylene diamine and adipic acid and then is supplied to an evaporator and concentrated therein by evaporation of water. The evaporator can successively feed a plurality of main-treatment vessels, provided as autoclaves, for batchwise processing of the polyamide salt solution. The length of treatment in pretreatment vessels is considerably shorter than the length of treatment in one of the main-treatment vessels so that a pretreatment vessel can successively feed a plurality of main-treatment vessels. A typical additive for polyamides is titanium dioxide (TiO₂). This additive changes the color impression of the polyamide, which by nature is opaque, and causes a whitish coloration. Further, however, the titanium dioxide influences the mechanical and chemical characteristics of the base material. In recent practice, the additive was introduced into the individual main-treatment vessels after filling the main-treatment vessel with the base material. When the additive is introduced, a portion of the additive, mixed with the base material, causes coating and fouling of the vessel surfaces. This leads to scaling or encrustations containing a high content of the additive, which subsequently peel off and thus contaminate the base material.

Further, it has been tried to introduce the additive already into the pretreatment vessel. This, however, entails the disadvantage that the pretreatment vessel as a whole is fouled by the additive and that, if in a subsequent batch no additive or another concentration of the additive is needed, the heel from the previous batch is transferred into the subsequent batch.

### DETAILED DESCRIPTION OF THE INVENTION

It is an object of the invention to propose a process by which a base material can be provided with selectable quantities of an additive without occurrence of undefined impurities in the industrial system and the base material.

In the method of the invention, the additive is introduced neither into the pretreatment vessel nor into the main-treatment vessel but is injected into the transfer line connecting to the main-treatment vessel. Introduction of the additive into the transfer line is carried out within the transfer phase in which the base material is fed into the respective main-treatment vessel. Thus, the additive is injected into the base material and mixed therewith during the transfer of the base material into the main-treatment vessel. In doing so, the injection phase starts only after the beginning of the transfer phase and ends already prior to the end of the transfer phase. Thus, it is ensured that the walls of the transfer line and the autoclave will not be fouled by the high concentration of the additive and that, at the beginning and the end of the transfer phase, it is exclusively the base material which is flowing through the transfer line and thus fulfills a cleaning function.

The additive is injected into that respective transfer line which is associated to a specific main-treatment vessel. Thereby, it is possible to operate a main-treatment vessel always with the same concentration of the additive or resp. to manufacture always the same final product in a main-treatment vessel. Accordingly the concentration of the additive in this main-treatment vessel is kept constant at all times without any variation of concentration, not even in successive batches. Further, it is precluded that additive from the pretreatment stage is carried over into different main-treatment stages. In the main-treatment vessels, scaling in the upper portion of the vessel is reliably prevented since the additive is mixed into the base material already in the transfer line.

Application of the invention is particularly advantageous in the production and processing of plastics, especially in the production of polyamides from a polyamide salt with TiO₂ being added as an additive. Generally, however, the invention is applicable also in other batch processes. The invention is further directed to an apparatus for treatment of a flowable base material and to a dosing device for introducing a flowable additive into a base material. An apparatus of said type is distinguished by a cylinder having its piston coupled to a drive cylinder piston. Additive is introduced into the dosing cylinder via a conveyer pump, the piston of the dosing cylinder being displaced while entraining the piston of the drive cylinder. After introduction of the desired fluid quantity into the dosing cylinder, the dosing device is ready for ejecting the contents of the dosing cylinder in a short time. This is achieved by pressurizing the piston of the drive cylinder by a pressure source so that the contents of the dosing cylinder is driven out. This dosing device allows injection of a precisely measured quantity in a given time and by very simple means.

A preferred embodiment of the invention will be explained in greater detail hereunder with reference to the drawings.
Fig. 1 shows a schematical diagram of a system for generating a polyamide from a polyamide salt being used for a base material, and an additive to be admixed,
Fig. 2 shows a more-detailed view of one of the pretreatment vessels of Fig. 1 together with the dosing device connected thereto, and
Fig. 3 shows a time diagram of the operation of the main-treatment vessel, illustrating the transfer phase, the injection phase and the replenishing phase of the dosing cylinder.

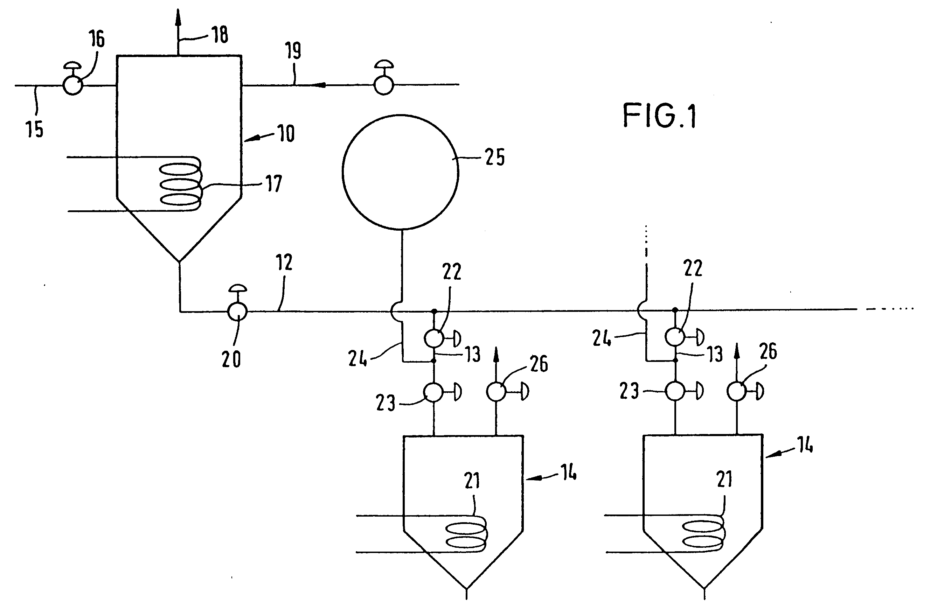

In the system shown in Fig. 1, there is provided a pretreatment vessel 10 being connected to the transfer lines 13 of a plurality of main-treatment vessels 14 through an outlet line 12. Each of these transfer lines 13 departs from outlet line 12 and leads to the respective main-treatment vessel 14.

The pretreatment vessel 10 is provided with an inlet line 15, including a valve 16, for supplying an aqueous solution of a polyamide salt from a mixing vessel (not shown) to the pretreatment vessel 10. Pretreatment vessel 10 is an evaporator heated by a heating means 17 and serving for concentrating the base material contained therein, i.e. the aqueous solution. Exhaust of steam from pretreatment vessel 10 is achieved through a vent line 18. For emptying the base material from the pretreatment vessel 10, the vessel is equipped with a pressure line 19 for introducing a propellant gas thereto. An outlet valve 20, installed at the bottom of the vessel, connects to outlet line 12.

Outlet line 12 is connected, via a respective transfer line 13, to a main-treatment vessel 14. The main-treatment vessel 14 is an autoclave, heated by a heating means 21, wherein the base material from pretreatment vessel 10 is polymerized under heat.

Transfer line 13 includes two remote operated valves 22 and 23, and the injection line 24, connected to dosing device 25, leads into the section between said valves. Further, main-treatment vessel 14 has its cover provided with a remote operated vent valve 26.

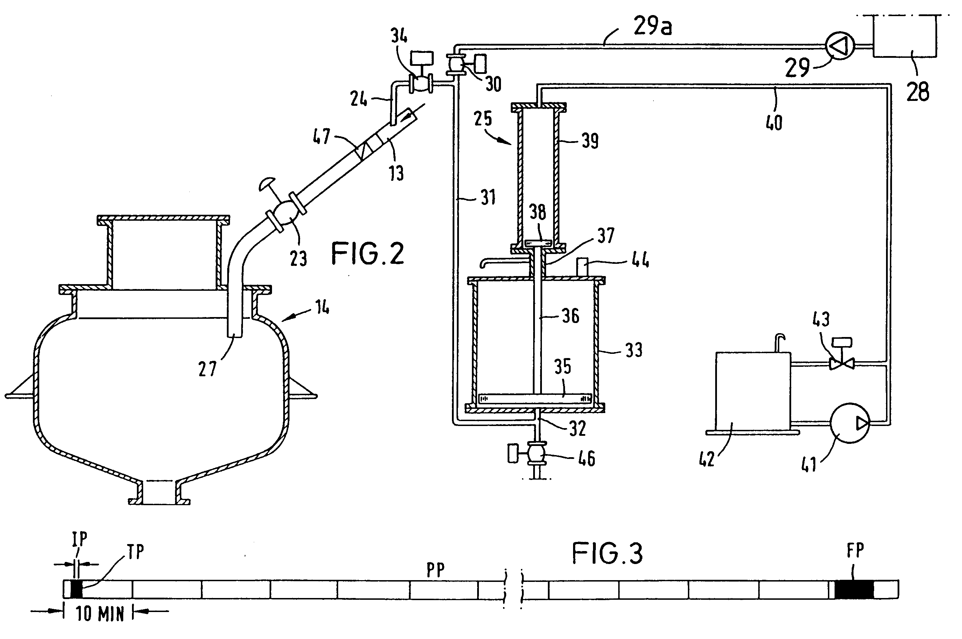

As Fig. 2 shows, transfer line 13 leads from above into main-treatment vessel 14 and terminates in a nozzle 27 in the main-treatment vessel 14.

The additive, in the present case titanium dioxide aqueous slurry, is supplied from a tank 28 via a volumetric dosing pump 29 to a supply line 29a being connected through an electrically operable valve 30 to line 31 which in turn leads to a connection 32 at the lower end of dosing cylinder 33. Behind valve 30, injection line 24 departs from dosing line 31 via another electrically operable valve 34. Valves 30 and 34 can be combined as one single three-way valve.

The dosing cylinder 33 contains the dosing piston 35, with its upwardly projecting piston rod 36 being guided through a sealing 37 in the upper end wall of the dosing cylinder and being connected to a drive piston 38. The drive piston 38 is arranged for reciprocation in the drive cylinder 39 mounted on the upper end of dosing cylinder 33. An hydraulic line 40 leads from the upper end wall of drive cylinder 39 to the outlet of a pressure source 41 which in this example is provided as a pump. The inlet of pump 41 is connected to the hydraulic tank 42. Pump 41 is bridged by an electrically operable valve 43 for connecting tank 42 to hydraulic line 40.

At the upper end of dosing cylinder 33 is an opening 44 for venting purposes and at the same time serving as an inspection port. Through opening 44, it can be checked whether fluid has penetrated into the area above doing piston 35 and whether the dosing piston has possibly become leaky.

The inner volume of dosing cylinder 33 is considerably larger than that of drive cylinder 39. In this manner, the volume of hydraulic fluid required to move drive piston 38 is kept low.

Connection 32 is further connected to a drain pipe via valve 46.

### Operation of the above system is as follows:

In a transfer phase, the base material, i.e. a polyamide salt, is driven out of pretreatment vessel 10 according to Fig. 1 by pressurizing the pretreatment vessel through line 19. Outlet valve 20 is opened, and also valves 22 and 23, leading to the respective main-treatment vessel 14, are opened while the transfer lines 13 of the other main-treatment vessels remain blocked. In Fig. 3, this transfer phase wherein base material is transferred from pretreatment vessel 10 into one of the main-treatment vessels 14, is designated by TP. During the transfer phase TP, the injection phase IP is carried out, starting after the beginning of the transfer phase and ending prior to the end of the transfer phase. Transfer phase TP takes e.g. about 90 seconds, with the length of injection phase IP being e.g. 50 seconds. The injection phase starts 20 seconds after the beginning of the transfer phase and ends 20 seconds prior to the end of the transfer phase.

The transfer phase TP is followed by the polymerization phase PP, lasting e.g. several hours and thus being much longer than the transfer phase. At the end of the polymerization phase PP, the filling phase FP takes place for filling or "loading" the dosing device with additive for the subsequent batch.

When valve 30 is in the opened state during the filling phase FP, th volumetric pump 29 delivers - at a certain pressure - a precisely measured quantity of the additive (here: titanium dioxide) to dosing cylinder 33. Thereby, dosing piston 35 is raised in dosing cylinder 33, with venting through opening 44. Via the common rod, drive piston 38 is raised in drive cylinder 39 whereby hydraulic fluid is displaced from the upper portion of drive cylinder 39 into hydraulic line 40. The hydraulic fluid is conveyed into tank 42 through the open valve 43.

In the subsequent injection phase IP, valves 30 and 43 are closed and valve 34 is opened. Pressure source 41 is switched on and pumps hydraulic fluid through hydraulic line 40 into drive cylinder 39. Thereby, drive piston 38 is moving downwards while pushing also dosing piston 35 downwards by the common piston rod 36. The additive is discharged via nozzle 32 into dosing line 31. From dosing line 31, the additive enters the injection line 24 connecting into transfer line 13.

Transfer line 13 includes a static mixer 47 for achieving a homogeneous mixing of the base material with the additive. Often, it will also be sufficient to provide the transfer line 13 with several bends. In such cases, the bends in the transfer line take over the function of mixing. The mixture of base material and additive is introduced into the main-treatment vessel 14 through the opened valve 23.

Since exclusively base material passes through transfer line 13 in the initial period and the end period of transfer phase TP, the tube wall is not exposed to an excessive concentration of additive. Moreover, the additive mixing into the base material is completed within the length of the transfer line. Thus, only a diluted additive will contact the walls of main-treatment vessel 14.

Outlet valve 46 is provided to flush the supply line 29a, the dosing line 31 and the dosing cylinder 33 for cleaning purposes.

## Claims

1. A process for the introduction of an additive into a liquid base material which in a first process step is processed in a pretreatment vessel (10) and in a subsequent transfer phase (TP) is transferred into one of at least two main-treatment vessels (14) through a transfer line (13) associated to the respective main-treatment vessel, said process providing the addition of a liquid additive to the base material in a batch polymerization process, characterized in that, in an injection phase (IP), the additive is injected into the transfer line (13) of the respective main-treatment vessel (14), said injection phase (IP) beginning at a time after the beginning of the transfer phase (TP) and ending at a time prior to the end of the transfer phase.

2. The process according to Claim 1, characterized in that the base material is a mixture of condensation polymer intermediates which in the first process step is concentrated by evaporation and in the second process step is polymerized.

3. The process according to Claim 2, characterized in that the polymer intermediate is a polyamide salt and the additive is selected from the group containing titanium dioxide, nucleants, color concentrates, antifoam, viscosity promoters, chain blockers and catalysts.

4. An apparatus for the introduction of an additive into a flowable base material, comprising a pretreatment vessel (10) with the outlet thereof being connectible respectively in a transfer phase (TP) to a transfer line (13) of one of a plurality of main-treatment vessels (14), characterized in that each of the transfer lines (13) has connected thereto a dosing line (25) provided with a dosing cylinder (33) for injecting additive into the transfer line (13) in art injection phase (IP), said dosing cylinder (33) having controlling means such that the injection phase (IP) begins at a time after the beginning of the transfer phase (TP) and ends at a time prior to the end of the transfer phase.

5. The apparatus according to Claim 4, characterized in that a dosing pistol (35) of the dosing cylinder (33) is connected to a driving piston (38) of a drive cylinder (39) by a common piston rod (36) and that the drive cylinder (39) in the injection phase (IP) is connected to a pressure source (41 ) and outside the injection phase maintains a neutral state wherein its piston rod (36) is displaceable by the force of the dosing piston (35).

6. The apparatus according to Claim 4 or 5, characterized in that a supply line (29a) coming from a tank (28) for additive is connected through a valve means (30,34) to an injection line (24) leading into the transfer line (13), said valve means (30,34) in the injection phase (IP) connecting the dosing cylinder (33) to the injection line (24) and outside the injection phase connecting the dosing cylinder (33) to the suppIy line (29a).

7. The apparatus according to Claim 5, characterized in that the drive cylinder (39) is connected to the pressure source (41) by one single hydraulic line (40) and that the pressure source (41), being connected to a tank (42), can be bridged in the injection phase (IP)

8. The apparatus according to Claims 4, 5, or 7 characterized in that the inner section of the drive cylinder (39) is smaller than that of the dosing cylinder (33).

9. The apparatus according to Claims 4 to 8 comprising a dosing device for supplying, in an injection phase (IP), a flowable additive into a transfer line (13) leading into a main-treatment vessel (14), comprising a dosing cylinder (33) connectible to an injection line (24), characterized in that a dosing piston (35) of the dosing cylinder (33) is connected to a driving piston (38) of a drive cylinder (39) by a common piston rod (36) and that the drive cylinder (39) in the injection phase (IP) is connected to a pressure source (41) and outside the injection phase maintains a neutral state wherein its piston rod (36) is displaceable by the force of the dosing piston (35).

10. The apparatus according to Claim 10, characterized in that a supply line (29a) coming from a tank (28) for additive is connected through a valve means (30,34) to an injection line (24) leading into the transfer line (13), said valve means (30,34) in the injection phase (IP) connecting the dosing cylinder (33) to the injection line (24) and outside the injection phase connecting the dosing cylinder (33) to the supply line (29a).

11. The apparatus according to Claim 9 or 10, characterized in that the drive cylinder (39) is connected to the pressure source (41) by one single hydraulic line (40) and that the pressure source (41), being connected to a tank (42), can be bridged during the injection phase (IP).

## Patentansprüche

1. Verfahren zur Einführung eines Additivs in ein flüssiges Ausgangsmaterial, das in einem ersten Verfahrensschritt in einem Vorbehandlungsgefäß (10) verarbeitet wird und während einer anschließenden Transferphase (TP) in eines von wenigstens zwei Hauptbehandlungsgefäßen (14) durch eine Transferleitung (13), die mit dem entsprechenden Hauptbehandlungsgefäß verbunden ist, überführt wird, wobei das genannte verfahren für die Zugabe eines flüssigen Additivs zu dem Ausgangsmaterial in einem Chargenpolymerisationsverfahren sorgt, dadurch gekennzeichnet, daß das Additiv während einer Injektionsphase (IP) in die Transferleitung (13) des entsprechenden Hauptbehandlungsgefäßes (14) eingespritzt wird, wobei die genannte Injektionsphase (IP) zu einem Zeitpunkt nach dem Beginn der Transferphase (TP) beginnt und zu einem Zeitpunkt vor dem Ende der Transferphase endet.

2. Verfahren gemäß Anspruch 1, dadurch gekennzeichnet, daß das Ausgangsmaterial eine Mischung aus Kondensationspolymerzwischenprodukten ist, das in dem ersten Verfahrensschritt durch Verdunsten konzentriert und in dem zweiten Verfahrensschritt polymerisiert wird.

3. Verfahren gemäß Anspruch 2, dadurch gekennzeichnet, daß das Polymerzwischenprodukt ein Polyamidsalz ist, und das Additiv aus der Gruppe ausgewählt wird, die Titandioxid, Nukleierungsmittel, Farbkonzentrate, Schaumverhütungsmittel, Viskositätsverstärker, Kettenblocker und Katalysatoren enthält.

4. Apparatur zur Einführung eines Additivs in ein fließbares Ausgangsmaterial, umfassend ein Vorbehandlungsgefäß (10), wobei dessen Auslaß während einer Transferphase (TP) jeweils mit einer Transferleitung (13) eines von mehreren Hauptbehandlungsgefäßen (14) verbindbar ist, dadurch gekennzeichnet, daß jede der Transferleitungen (13) eine damit verbundene, mit einem Dosierzylinder (33) ausgerüstete Dosierleitung (25) zum Einspritzen von Additiv in die Transferleitung (13) während einer Injektionsphase (IP) besitzt, wobei der genannte Dosierzylinder (33) solche Steuereinrichtungen besitzt, daß die Injektionsphase (IP) zu einem Zeitpunkt nach dem Beginn der Transferphase (TP) beginnt und zu einem Zeitpunkt vor dem Ende der Transferphase endet.

5. Apparatur gemäß Anspruch 4, dadurch gekennzeichnet, daß ein Dosierkolben (35) des Dosierzylinders (33) mit einem Antriebskolben (38) eines Antriebszylinders (39) durch eine gemeinsame Kolbenstange (36) verbunden ist, und daß der Antriebszylinder (39) während der Injektionsphase (IP) mit einer Druckquelle (41) verbunden ist und außerhalb der Injektionsphase einen neutralen Zustand beibehält, wobei seine Kolbenstange (36) durch die Kraft des Dosierzylinders (35) verschiebbar ist.

6. Apparatur gemäß Anspruch 4 oder 5, dadurch gekennzeichnet, daß eine von einem Tank (28) für Additiv kommende Zufuhrleitung (29a) durch Ventile (30, 34) mit einer Injektionsleitung (24), die in die Transferleitung (13) führt, verbunden ist, wobei die genannten Ventile (30, 34) während der Injektionsphase (IP) den Dosierzylinder (33) mit der Injektionsleitung (24) und außerhalb der Injektionsphase den Dosierzylinder (33) mit der Zufuhrleitung (29a) verbinden.

7. Apparatur gemäß Anspruch 5, dadurch gekennzeichnet, daß der Antriebszylinder (39) mit der Druckquelle (41) durch eine einzige Hydraulikleitung (40) verbunden ist, und daß die Druckquelle (41), die mit einem Tank (42) verbunden ist, während der Injektionsphase (IP) überbrückt werden kann.

8. Apparatur gemäß den Ansprüchen 4, 5 oder 7, dadurch gekennzeichnet, daß der Innenquerschnitt des Antriebszylinders (39) kleiner wie der des Dosierzylinders (33) ist.

9. Apparatur gemäß den Ansprüchen 4 bis 8, umfassend eine Dosiervorrichtung zum Zuführen eines fließbaren Additivs während einer Injektionsphase (IP) in eine Transferleitung (13), die in ein Hauptbehandlungsgefäß (14) führt, umfassend einen Dosierzylinder (33) der mit einer Injektionsleitung (24) verbindbar ist, dadurch gekennzeichnet, daß ein Dosierkolben (35) des Dosierzylinders (33) mit einem Antriebskolben (38) eines Antriebszylinders (39) durch eine gemeinsame Kolbenstange (36) verbunden ist, und daß der Antriebszylinder (39) während der Injektionsphase (IP) mit einer Druckquelle (41) verbunden ist und außerhalb der Injektionsphase einen neutralen Zustand beibehält, wobei seine Kolbenstange (36) durch die Kraft des Dosierkolbens (35) verschiebbar ist.

10. Apparatur gemäß Anspruch 10, dadurch gekennzeichnet, daß eine von einem Tank (28) für Additiv kommende Zufuhrleitung (29a) durch Ventile (30, 34) mit einer Injektionsleitung (24), die in die Transferleitung (13) führt, verbunden ist, wobei die genannten Ventile (30, 34) während der Injektionsphase (IP) den Dosierzylinder (33) mit der Injektionsleitung (24) und außerhalb der Injektionsphase den Dosierzylinder (33) mit der Zufuhrleitung (29a) verbinden.

11. Apparatur gemäß Anspruch 9 oder 10, dadurch gekennzeichnet, daß der Antriebszylinder (39) mit der Druckquelle (41) durch eine einzige Hydraulikleitung (40) verbunden ist, und daß die Druckquelle (41), die mit einem Tank (42) verbunden ist, während der Injektionsphase (IP) überbrückt werden kann.

## Revendications

1. Un procédé pour l'introduction d'un additif dans un matériau de base liquide,
celui-ci, dans une première phase du procédé, étant traité dans un récipient de pré-traitement (10) et, dans une phase de transfert subséquente (TP) étant transféré dans l'un parmi au moins deux récipients de traitement principaux (14) par l'intermédiaire d'une conduite de transport (13) associée au récipient de traitement principal respectif,
ledit procédé procurant l'addition d'un additif liquide au matériau de base dans un procédé de polymérisation en discontinu,
caractérisé en ce que, dans une phase d'injection (IP), l'additif est injecté dans la conduite de transport (13) du récipient respectif de traitement principal (14), ladite phase d'injection (TP) commençant un moment après le début de la phase de transfert (TP) et finissant à un moment avant la fin de la phase de transfert.

2. Le procédé selon la revendication 1, caractérisé en ce que le matériau de base est un mélange de produits intermédiaires de polymère de condensation qui, dans la première étape du procédé, est concentré par évaporation et dans la seconde étape, est polymérisé.

3. Le procédé selon la revendication 2, caractérisé en ce que le produit intermédiaire de polymère est un sel de polyamide et l'additif est choisi dans le groupe constitué du dioxyde de titane, d'agents de nucléation, de concentrés de couleur, d'agents anti-mousse, de promoteurs de viscosité, d'agents de blocage des chaînes et de catalyseurs.

4. Un appareil pour l'introduction d'un additif dans un matériau de base coulant, comportant un récipient de pré-traitement (10) dont la sortie peut, dans une phase de transfert (TP), être connectée respectivement à une conduite de transport (13) d'un parmi une pluralité de récipients de traitement principal (14),
caractérisé en ce que chacune des conduites de transport (13) est connectée à une conduite de dosage (25) pourvue d'un cylindre doseur (33) destiné à injecter l'additif dans la conduite de transfert (13) au cours d'une phase d'injection (IP), ledit cylindre doseur (33) ayant des moyens de commande agencés de façon que la phase d'injection (IP) commence à un moment après le début de la phase de transfert (TP) et finit à un moment avant la fin de la phase de transfert.

5. L'appareil selon la revendication 4, caractérisé en ce qu'un piston doseur (35) du cylindre doseur (33) est connecté à un piston d'entraînement (38), d'un cylindre d'entraînement (39) au moyen d'une tige de piston commune (36) et que le cylindre d'entraînement (39), au cours de la phase d'injection (IP) est connecté à une source de pression (41) et en dehors de la phase d'injection, se maintient dans un état neutre dans lequel sa tige de piston (36) est susceptible d'être déplacée par la force du piston doseur (35).

6. L'appareil selon la revendication 4 ou 5, caractérisé en ce qu'une conduite d'alimentation (29a) provenant d'un réservoir (28) pour additif est connecté par l'intermédiaire d'un dispositif à vanne (30,34) à une conduite d'injection (24) aboutissant dans la conduite de transport (13), ledit dispositif à vanne (30, 34), dans la phase d' injection (IP), connectant le cylindre doseur (33) à la conduite d'injection (24), et, en dehors de la phase d'injection, connectant le cylindre doseur (33) à la conduite d'alimentation (29a).

7. L'appareil selon la revendication 5, caractérisé en ce que le cylindre d'entraînement (39) est connecté à la source de pression (41) par une conduite hydraulique unique (40) et que la source de pression (41), qui est mise à un réservoir (42), peut être connectée en dérivation dans la phase d'injection (IP).

8. L'appareil selon les revendications 4, 5 ou 7, caractérisé en ce que la section interne du cylindre d'entraînement (39) est plus petite que celle du cylindre doseur (33).

9. L'appareil selon les revendications 4 à 8, comportant un dispositif de dosage pour transférer, dans une phase d'injection (IP), un additif coulant dans une conduite de transport (13) conduisant dans un récipient de traitement principal (14),
et un cylindre doseur (33) susceptible d'être connecté à une conduite d'injection (24), caractérisé en ce qu'un piston doseur (35) du cylindre doseur (33) est connecté à un piston d'entraînement (38) d'un cylindre d'entraînement (39) au moyen d'une tige de piston commune (36)
et que le cylindre d'entraînement (39), dans la phase d'injection (IP), est connecté à une source de pression (41) et, en dehors de la phase d'injection, se maintient dans un état neutre dans lequel sa tige de piston (36) est susceptible d'être déplacée par la force du piston doseur (35).

10. L'appareil selon la revendication 10, caractérisé en ce qu'une conduite d'alimentation (29a) provenant d'un réservoir (28) pour additif est connectée par l'intermédiaire d'un dispositif à vanne (30,34) à une conduite d'injection (24) aboutissant dans une conduite de transfert (13), ledit dispositif à vanne (30,34), dans la phase d'injection (IP), connectant le cylindre doseur (33) à la conduite d'injection (24) et, en dehors de la phase d'injection, connectant le cylindre doseur (33) à la conduite d'alimentation (29a).

11. L'appareil selon la revendication 9 ou 10, caractérisé en ce que le cylindre d'entraînement (39) est connecté à l'alimentation de pression (41) par une conduite hydraulique unique (40) et que la source de pression (41), qui est mise à un réservoir (42) peut être mise en dérivation pendant la phase d'injection (IP).
